# EUROPÄISCHE PATENTSCHRIFT

(11) **EP 2 694 308 B1**
(45) Veröffentlichungstag und Bekanntmachung des Hinweises auf die Patenterteilung: **25.05.2016**
(21) Anmeldenummer: 12709808.5
(22) Anmeldetag: 17.03.2012
(51) Int. Cl.: B60K 6/365, B60K 6/445

(54) **HYBRIDANTRIEBSANORDNUNG FÜR EIN KRAFTFAHRZEUG**
HYBRID DRIVE ARRANGEMENT FOR A MOTOR VEHICLE
SYSTÈME DE PROPULSION HYBRIDE POUR UN VÉHICULE AUTOMOBILE

(30) Priorität: 06.04.2011 DE 102011016096
(43) Veröffentlichungstag der Anmeldung: 12.02.2014
(73) Patentinhaber: Volkswagen Aktiengesellschaft, 38440 Wolfsburg (DE)
(72) Erfinder: SCHOLZ, Norbert, 38106 Braunschwieg (DE)
(86) Internationale Anmeldenummer: PCT/EP2012/001191
(87) Internationale Veröffentlichungsnummer: WO 2012/136310

(56) Entgegenhaltungen:
- WO-A1-2010/113537
- US-A1- 2008 015 073

## Beschreibung

### Gebiet der Erfindung

Die Erfindung bezieht sich auf eine Hybridantriebsanordnung für Kraftfahrzeuge.

### Stand der Technik

Hybridantriebsanordnungen in Form leistungsverzweigter Getriebe sind dem Fachmann in vielfacher Ausgestaltung bekannt. Aus der WO 2010/113537 A1 (dort insbesondere Figur 35) ist eine Hybridantriebsanordnung mit einer ersten und einer zweiten elektrischen Maschine bekannt, die in Innenläuferbauweise ausgestaltet sind und jeweils einen innenliegenden Rotor und einen äußeren, gehäusefesten Stator aufweisen und sowohl im motorischen als auch im generatorischen Betrieb betreibbar sind. Die beiden elektrischen Maschinen sind über eine Leistungselektronik miteinander verbunden. Über die Leistungselektronik sind die elektrischen Maschinen weiter an einen elektrischen Energiespeicher anschließbar. Eine Eingangswelle des Getriebes ist an eine Verbrennungskraftmaschine anschließbar. Eine Ausgangswelle des Getriebes ist an einen Abtriebsstrang anschließbar, der insbesondere ein Differential sowie die Antriebsräder umfasst. Die bekannte Anordnung umfasst weiter drei Planetensätze, die jeweils, wie üblich, ein zentrales Sonnenrad, ein äußeres Hohlrad sowie einen Steg aufweisen, auf dem wenigstens ein Satz Planetenräder, die einerseits mit dem Sonnenrad und andererseits mit dem Hohlrad kämmen, rotierbar angeordnet sind.

Bei der bekannten Anordnung ist die Sonne des ersten Planetensatzes mit dem Rotor der ersten elektrischen Maschine verbunden, sein Steg ist mit der Eingangswelle verbunden und sein Hohlrad ist mit der Ausgangswelle verbunden.

Der Begriff "verbunden" wird hier im Sinne einer festen Verbindung benutzt. Wenn im Gegensatz dazu eine schalt- oder variierbare Verbindung gemeint ist, wird im Sinne der vorliegenden Beschreibung der Begriff "gekoppelt" verwendet.

Bei der bekannten Anordnung ist die Sonne des zweiten Planetensatzes mit dem Rotor der zweiten elektrischen Maschine verbunden, sein Steg ist über eine Kupplung mit dem Steg des ersten Planetensatzes gekoppelt und sein Hohlrad ist gehäusefest angeordnet. Die Sonne des dritten Planetensatzes ist über eine Bremse mit dem Getriebegehäuse gekoppelt und ist über eine weitere Kupplung mit der Sonne des zweiten Planetensatzes gekoppelt. Der Steg des dritten Planetensatzes ist mit der Ausgangswelle verbunden und sein Hohlrad ist mit dem Steg des zweiten Planetensatzes verbunden.

Die bekannte Vorrichtung bietet zwar zwei leistungsverzweigte Fahrbereiche, einen festen Gang (Overdrive) sowie einen rein elektrischen Fahrbetrieb; allerdings wirken dabei insbesondere im ersten leistungsverzweigen, hauptsächlich genutzten Fahrbereich eine Vielzahl von Verzahnungen, die aufgrund des unvermeidbaren Reibungsverlustes zu Wirkungsgradeinbußen führen. Außerdem zeigt der zweite leistungsverzweigte Fahrbereich, der u.a. zum Start der elektrischen Maschine genutzt wird, nur eine geringe Momentenverstärkung, sodass die zweite elektrische Maschine vergleichsweise momentenstark ausgebildet sein muss.

### Aufgabenstellung

Es ist die Aufgabe der vorliegenden Erfindung, eine alternative Hybridantriebsanordnung mit verbessertem Wirkungsgrad und höherer Momentenverstärkung für den Start der Verbrennungskraftmaschine im 2. Fahrbereich zur Verfügung zu stellen.

### Darlegung der Erfindung

Diese Aufgabe wird gelöst mit den Merkmalen von Anspruch 1. Insbesondere wird eine Hybridantriebsanordnung für ein Kraftfahrzeug vorgeschlagen, umfassend
- eine erste und eine zweite elektrische Maschine, die jeweils einen Rotor und einen Stator aufweisen und sowohl im motorischen als auch im generatorischen Betrieb betreibbar und über eine Leistungselektronik miteinander verbunden und an einen elektrischen Energiespeicher anschließbar sind,
- eine an eine Verbrennungskraftmaschine anschließbare Eingangswelle und eine an einen Abtriebsstrang anschließbare Ausgangswelle,
- einen ersten Planetensatz, dessen Sonne mit dem Rotor der ersten elektrischen Maschine verbunden ist, dessen Steg mit der Eingangswelle verbunden ist und dessen Hohlrad mit der Ausgangswelle verbunden ist,
- einen zweiten Planetensatz, dessen Sonne mit dem Rotor der zweiten elektrischen Maschine verbunden ist, dessen Steg über eine erste Kupplung mit der Ausgangswelle gekoppelt ist und dessen Hohlrad mit einem Getriebegehäuse verbunden ist, und
- einen dritten Planetensatz, dessen Sonne über eine erste Bremse mit dem Getriebegehäuse gekoppelt ist, dessen Steg mit der Eingangswelle verbunden ist und dessen Hohlrad mit dem Steg des zweiten Planetensatzes verbunden ist.

Vorteilhafte Ausführungsformen der Erfindung sind Gegenstand der abhängigen Patentansprüche.

Mit der erfindungsgemäßen Antriebsanordnung lassen sich vier verschiedene Betriebsmodi realisieren, nämlich ein erster leistungsverzweigter Modus, ein zweiter leistungsverzweigter Modus, ein fester (sechster) Gang und ein elektrischer Modus.

Im ersten leistungsverzweigten Modus ist die erste Kupplung geschlossen, wohingegen die erste Bremse geöffnet ist. Die mechanische Leistung verzweigt sich im ersten Planetensatz. Ein Teil der mechanischen Leistung läuft über das Hohlrad zur Ausgangswelle. Ein weiterer Teil der Leistung läuft über die Sonne zum Rotor der ersten elektrischen Maschine, die im generatorischen Betrieb arbeitet und ihre elektrische Leistung über den elektrischen Leistungszweig zur zweiten elektrischen Maschine leitet, die im motorischen Betrieb arbeitet. Die motorische Leistung der zweiten elektrischen Maschine läuft über den zweiten Planetensatz, der aufgrund seines gehäusefesten Hohlrades als einfache Übersetzungsstufe wirkt, und über die geschlossene erste Kupplung zur Ausgangswellle. Der dritte Planetensatz läuft aufgrund seiner freien Sonne (die erste Bremse ist geöffnet) als Block um, sodass hier keine Verzahnungen aktiv werden. Man erkennt, dass in diesem ersten leistungsverzweigten Modus nur vier Verzahnungen (erster Planetensatz: Sonne/Planetenräder, Planetenräder/Hohlrad; zweiter Planetensatz: Sonne/Planetenräder, Planetenräder/Hohlrad) aktiv sind und Reibungsverluste erzeugen können. Der dritte Planetensatz hingegen trägt nicht zur Reduzierung des Wirkungsgrades bei, wie dies im Stand der Technik der Fall ist. Der erste Vorteil der vorliegenden Erfindung liegt somit in einer Verbesserung des Wirkungsgrades im ersten leistungsverzweigten Modus.

Der zweite leistungsverzweigte Modus zeichnet sich dadurch aus, dass die erste Kupplung geöffnet und die erste Bremse geschlossen ist. Dieser Modus kann insbesondere zum Start der Verbrennungskraftmaschine mittels der zweiten elektrischen Maschine genutzt werden. Deren Moment wird im Gegensatz zum Stand der Technik über zwei Planetensätze, nämlich den zweiten und den dritten Planetensatz verstärkt, sodass die zweite elektrische Maschine insgesamt mit einem geringeren Moment ausgelegt sein kann (Hochdrehzahlkonzept), was vorteilhaft im Hinblick auf die Kosten der zweiten elektrischen Maschine ist. Dieser Fahrbereich erlaubt zudem auch den rein elektrischen Betrieb, wobei die Antriebsleistung im Wesentlichen aus der ersten elektrischen Maschine stammt und die zweite elektrische Maschine still steht, jedoch bestromt wird, um die Eingangswelle abzustützen. Der zweite Vorteil der vorliegenden Erfindung liegt somit in der Verringerung des für den Start der Verbrennungskraftmaschine erforderlichen Momentes der elektrischen Maschine zwei.

Der starre (sechste) Gang wird durch Schließen der ersten Kupplung und der ersten Bremse realisiert.

Bei einer ersten Weiterbildungsvariante der Erfindung ist vorgesehen, dass der Rotor der zweiten elektrischen Maschine über eine zweite Bremse mit dem Getriebegehäuse gekoppelt ist. Diese zweite Bremse findet vorteilhafte Verwendung beim rein elektrischen Betrieb, wo sie den Rotor der zweiten elektrischen Maschine festhält. Hierdurch muss die Abstützung der Eingangswelle nicht über die zweite elektrische Maschine erfolgen, sodass diese unbestromt bleiben kann, was eine weitere Steigerung des Wirkungsgrades bewirkt.

Bei einer zweiten Weiterbildungsvariante der vorliegenden Erfindung ist anstelle der oben erläuterten zweiten Bremse vorgesehen, dass die Sonne des dritten Planetenrades über eine zweite Kupplung mit der Eingangswelle verbunden ist. Auch diese Maßnahme wirkt sich insbesondere im rein elektrischen Fahrbetrieb aus. Schließen der ersten Bremse und der ersten Kupplung bedeutet nämlich, dass die Eingangswelle gemeinsam mit der Sonne des dritten Planetensatzes über die erste Bremse am Gehäuse festgelegt ist. Somit erfolgt auch hier die Abstützung der Eingangswelle rein mechanisch, sodass die zweite elektrische Maschine unbestromt bleiben kann.

Weiter lässt sich mit der zweiten Kupplung ein zusätzlicher starrer (vierter) Gang realisieren, indem die erste und zweite Kupplung geschlossen und die erste Bremse geöffnet wird.

Bei einer ersten Verbesserung der zweiten Weiterbildungsvariante der Erfindung ist vorgesehen, dass die Sonne des zweiten Planetensatzes über eine dritte Kupplung mit dem Steg des dritten Planetensatzes gekoppelt ist. Hierdurch wird ein zusätzlicher starrer (zweiter) Gang realisiert, indem die erste und die dritte Kupplung geschlossen und die erste Bremse sowie die erste Bremse sowie die zweite Kupplung geöffnet werden.

Bei einer zweiten Verbesserung ist zusätzlich vorgesehen, dass der Rotor der ersten elektrischen Maschine über eine dritte Bremse mit dem Getriebegehäuse gekoppelt ist. Hierdurch wird ein zusätzlicher starrer (fünfter) Gang realisiert, indem die erste Kupplung und die dritte Bremse geschlossen und die erste Bremse sowie die zweite und die dritte Kupplung geöffnet werden.

Dieselben Funktionalitäten lassen sich dadurch realisieren, dass, ausgehend von der oben erläuterten zweiten Weiterbildungsvariante der Erfindung der Rotor der ersten elektrischen Maschine über eine dritte Bremse mit dem Getriebegehäuse gekoppelt ist und dass der Rotor der zweiten elektrischen Maschine über eine vierte Kupplung mit der Sonne des dritten Planetensatzes gekoppelt ist. Hierdurch werden, ausgehend von der zweiten Weiterbildungsvariante der Erfindung zwei zusätzliche starre Gänge (ein dritter und ein fünfter Gang) realisiert. Der fünfte Gang wird, wie oben im Zusammenhang mit der zweiten Verbesserung der zweiten Weiterbildungsvariante bereits erläutert, durch Schließen der dritten Bremse und der ersten Kupplung bei geöffneter erster Bremse sowie geöffneter zweiter und dritter Kupplung realisiert. Der dritte Gang wird realisiert, indem die erste und die vierte Kupplung geschlossen und die zweite Kupplung sowie die erste und die dritte Bremse geöffnet werden.

Eine Verbesserung dieser Ausführungsform ist dadurch gegeben, dass die Sonne des zweiten Planetensatzes über eine dritte Kupplung mit dem Steg des dritten Planetensatzes gekoppelt ist. Mit anderen Worten wird zur Erreichung dieser Verbesserung bei der zuletzt beschriebenen Ausführungsform zusätzlich die bereits aus der unmittelbar davor beschriebenen Ausführungsform bekannte dritte Kupplung zugefügt. Ebenso könnte diese Verbesserung auch ausgehend von der zweiten Verbesserung der zweiten Weiterbildungsvariante der Erfindung dadurch beschrieben werden, dass der Rotor der zweiten elektrischen Maschine über eine vierte Kupplung mit der Sonne des dritten Planetensatzes gekoppelt ist. Unabhängig davon, von welcher speziellen Ausführungsform man ausgeht, führt die beschriebene Verbesserung zur Realisierung eines weiteren starren Ganges.

Weitere Merkmale und Vorteile der vorliegenden Erfindung ergeben sich aus der nachfolgenden, speziellen Beschreibung und den Zeichnungen.

### Kurze Beschreibung der Zeichnungen

Es zeigen:
- Figur 1:: eine grundlegende Ausführungsform der vorliegenden Erfindung,
- Figur 2:: eine funktional gleichwertige Alternative zur Ausführungsform von Figur 1,
- Figur 3:: eine zweite Ausführungsform der Erfindung (erste Weiterbildungsvariante),
- Figur 4:: eine funktional gleichwertige Alternative zur Ausführungsform von Figur 3,
- Figur 5:: eine dritte Ausführungsform der Erfindung (zweite Weiterbildungsvariante),
- Figur 6:: eine funktional gleichwertige Alternative zur Ausführungsform von Figur 5,
- Figur 7:: eine vierte Ausführungsform der Erfindung (erste Verbesserung der zweiten Weiterbildungsvariante),
- Figur 8:: eine funktional gleichwertige Alternative zur Ausführungsform von Figur 7,
- Figur 9:: eine fünfte Ausführungsform der Erfindung (zweite Verbesserung der zweiten Weiterbildungsvariante),
- Figur 10:: eine funktional gleichwertige Alternative zur Ausführungsform von Figur 9,
- Figur 11:: eine sechste Ausführungsform der Erfindung (alternative Verbesserung der zweiten Weiterbildungsvariante),
- Figur 12:: eine funktional gleichwertige Alternative zur Ausführungsform von Figur 11,
- Figur 13:: eine siebte Ausführungsform der Erfindung (Kombination der fünften und sechsten Ausführungsform),
- Figur 14:: eine funktional gleichwertige Alternative zur Ausführungsform von Figur 13.

### Ausführliche Beschreibung bevorzugter Ausführungsformen

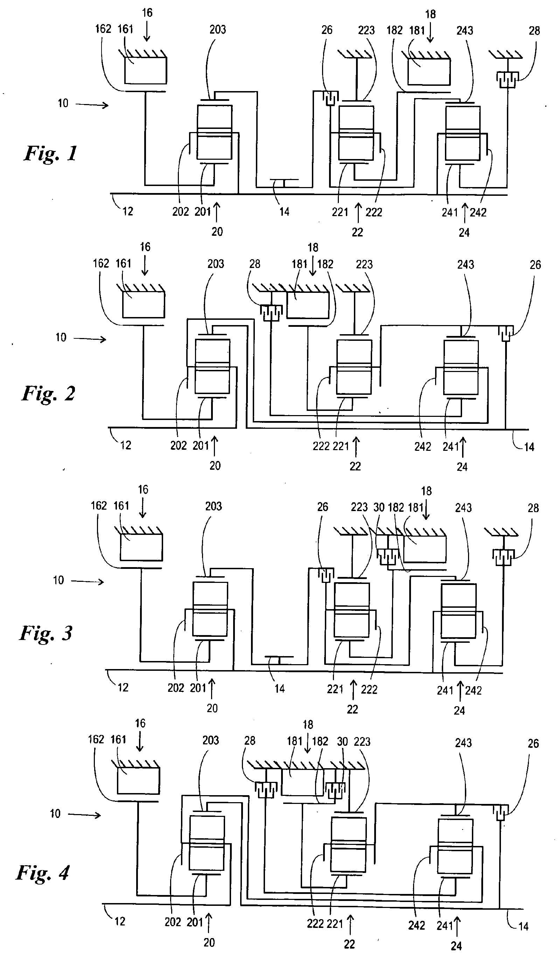

Figur 1 zeigt die Grundform der erfindungsgemäßen Hybridantriebsanordnung 10. Die Eingangswelle 12 ist an eine nicht dargestellte Verbrennungskraftmaschine anschließbar. Die Ausgangswelle 14 ist an einen ebenfalls nicht dargestellten Abtriebsstrang anschließbar. Zwischen Eingangswelle 12 und Ausgangswelle 14 sind eine erste elektrische Maschine 16 mit einem Stator 161 und einem Rotor 162, eine zweite elektrische Maschine 18 mit einem Stator 181 und einem Rotor 182, ein erster Planetensatz 20 mit Sonne 201, Steg 202 und Hohlrad 203, ein zweiter Planetensatz 22 mit Sonne 221, Steg 222 und Hohlrad 223 sowie ein dritter Planetensatz 24 mit Sonne 241, Steg 242 und Hohlrad 243 angeordnet. Weiter sind zwei Schaltelemente umfasst, nämlich eine erste Kupplung 26 sowie eine erste Bremse 28. Bzgl. der konstruktiven Ausgestaltung von Kupplungen und Bremsen macht die vorliegende Erfindung keine speziellen Vorgaben. Insbesondere können form- oder reibschlüssige Elemente verwendet werden, wobei der Unterschied zwischen "Kupplung" und "Bremse" im vorliegenden Zusammenhang lediglich darin zu sehen ist, dass letztere eine bewegte Welle mit dem Gehäuse und erstere zwei bewegte Wellen miteinander koppelt.

Bei der in Figur 1 dargestellten Ausführungsform ist die Eingangswelle 12 mit dem Steg 202 des ersten Planetensatzes 20 sowie mit dem Steg 242 des dritten Planetensatzes 24 verbunden. Die Sonne 201 des ersten Planetensatzes 20 ist mit dem Rotor 162 der ersten elektrischen Maschine 16 verbunden. Das Hohlrad 203 des ersten Planetensatzes 20 ist mit der Ausgangswelle 14 verbunden.

Die Ausgangswelle 14 ist zudem über die erste Kupplung 26 mit dem Hohlrad 243 des dritten Planetensatzes 24 sowie mit dem Steg 222 des zweiten Planetensatzes 22, der seinerseits mit dem Hohlrad 243 des dritten Planetensatzes 24 verbunden ist, gekoppelt.

Das Hohlrad 223 des zweiten Planetensatzes 22 ist am Getriebegehäuse festgelegt. Die Sonne 221 des zweiten Planetensatzes 22 ist mit dem Rotor 182 der zweiten elektrischen Maschine 18 verbunden.

Die Sonne 241 des dritten Planetensatzes 24 ist über die erste Bremse 28 mit dem Getriebegehäuse gekoppelt.

Die mit dieser Ausführungsform realisierbaren Betriebsmoden, die hier auch als Fahrbereich angesprochen werden, sind die folgenden.
- Erster leistungsverzweigter Modus:: erste Bremse 28 geöffnet, erste Kupplung 26 geschlossen.
- Zweiter leistungsverzweigter Modus:: erste Bremse 28 geschlossen, erste Kupplung 26 geöffnet.
- Fester Gang (sechster Gang):: erste Bremse 28 geschlossen, erste Kupplung 26 geschlossen.
- Elektrischer Modus:: erste Bremse 28 geschlossen, erste Kupplung 26 geöffnet.

Die leistungsverzweigten Bereiche sind, wie auch bei den übrigen Ausführungsformen, insbesondere durch ihre stufenlose Variationsmöglichkeit der Gesamtübersetzung (CVT-Betrieb) gekennzeichnet. Die starren Gänge sind durch den Hybrid-Parallelmodus gekennzeichnet. Im vorliegenden Fall unterscheiden sich der zweite leistungsverzweige Modus und der elektrische Modus nicht in der Stellung der Schaltelemente 26, 28 sondern lediglich in der im elektrischen Modus stehenden Verbrennungskraftmaschine.

Figur 2 zeigte eine ebenfalls erfindungsgemäße Hybridantriebsanordnung 10', die funktional der Anordnung von Figur 1 entspricht, bei der jedoch die einzelnen Elemente, die mit denselben Bezugszeichen wie in Figur 1 versehen sind, so angeordnet sind, dass die Eingangswelle 12 und die Ausgangswelle 14 koaxial angeordnet sind. Im übrigen kann ohne Einschränkungen auf das oben zu Figur 1 gesagte verwiesen werden.

Die übrigen Figuren 3 bis 14 zeigen jeweils schrittweise Verfeinerung der Grundformen der Figuren 1 und 2, wobei die ungeradzahligen Figuren jeweils Verfeinerungen der Grundform von Figur 1 und die geradzahligen Figuren Verfeinerungen der Grundform von Figur 2 darstellten. In allen Figuren werden für gleiche bzw. einander entsprechende Elemente gleiche Bezugszeichen verwendet. Die Figuren 3 bis 14 sollen nachfolgend im Wesentlichen nur an Hand ihrer Unterschiede zu Figur 1 bzw. Figur 2 beschrieben werden.

Die Ausführungsformen der Figuren 3 und 4 unterscheiden sich von den Grundformen der Erfindung durch die Anordnung einer zweiten Bremse 30, die den Rotor 182 der zweiten elektrischen Maschine 18 mit dem Gehäuse koppelt. Aufgrund der zweiten Bremse 30 kann die zweite elektrische Maschine 18 im elektrischen Modus unbestromt bleiben, da sie im Gegensatz zu den Grundformen nicht benötigt wird, um das auf die Eingangswelle 12 wirkende Moment abzustützen. Die mit den Ausführungsformen der Figuren 3 und 4 realisierbaren Fahrbereiche sowie ihre konkrete Realisierung durch Stellung der Schaltelemente entspricht dem oben im Zusammenhang mit den Figuren 1 und 2 gesagten, wobei sich jedoch der elektrische Modus wie folgt unterscheidet:
- Elektrischer Modus:: erste Bremse 28 geschlossen, zweite Bremse 30 geschlossen, erste Kupplung 26 geöffnet.

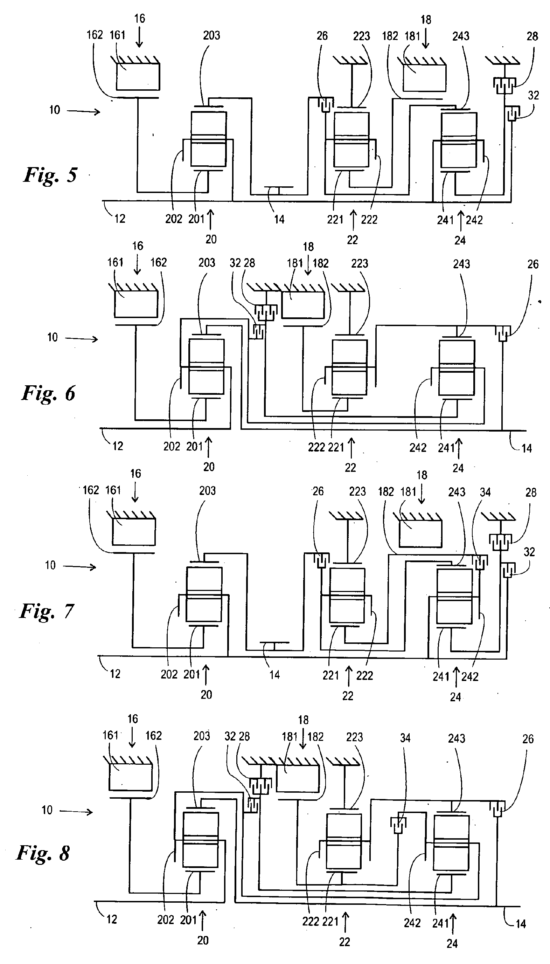

Die Ausführungsformen der Figuren 5 und 6 unterscheiden sich von den Grundformen der Figuren 1 und 2 durch eine zweite Kupplung 32, die die Eingangswelle 12 mit der Sonne 241 des dritten Planetensatzes 24 koppelt. Hierdurch lassen sich zwei gegenüber den Grundformen der Figuren 1 und 2 verschiedene Fahrbereiche realisieren, nämliche die folgenden:
- Elektrischer Modus:: erste Bremse 28 geschlossen, erste Kupplung 26 geöffnet, zweite Kupplung 32 geschlossen.
- Starrer (vierter) Gang:: erste Bremse 28 geöffnet, erste Kupplung 26 geschlossen, zweite Kupplung 32 geschlossen.

Die Abstützfunktion des Momentes auf die Eingangswelle 12 im elektrischen Modus, die bei den Ausführungsformen der Figuren 3 und 4 mit der dortigen zweiten Bremse 30 erreicht wurde, wird bei den Ausführungsformen der Figuren 5 und 6 durch das gemeinsame Schließen der ersten Bremse 28 und der zweiten Kupplung 32 erreicht.

Die Ausführungsformen der Figuren 7 und 8 entsprechen den Ausführungsformen der Figuren 5 bzw. 6 mit einer zusätzlichen, dritten Kupplung 34, die den Steg 242 des dritten Planetensatzes 24 mit dem Rotor 182 der zweiten elektrischen Maschine 18 koppelt. Hierdurch wird folgender zusätzlicher Fahrbereich realisiert.
- Fester (zweiter) Gang:: erste Bremse 28 geöffnet, erste Kupplung 26 geschlossen, zweite Kupplung 32 geöffnet, dritte Kupplung 34 geschlossen.

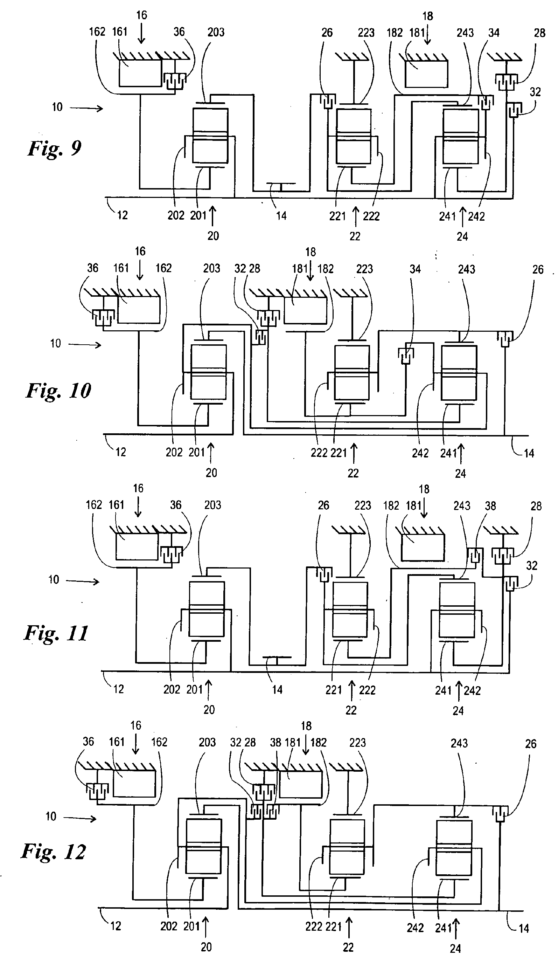

Die Ausführungsformen der Figuren 9 und 10 unterscheiden sich von den Ausführungsformen der Figuren 7 und 8 durch eine zusätzliche, dritte Bremse 36, die den Rotor 162 der ersten elektrischen Maschine 16 mit dem Getriebegehäuse koppelt. Hierdurch lässt sich folgender zusätzlicher Fahrbereich realisieren.
- Fester (fünfter) Gang:: erste Bremse 28 geöffnet, dritte Bremse 36 geschlossen, erste Kupplung 26 geschlossen, zweite Kupplung 32 geöffnet, dritte Kupplung 34 geöffnet.

Die Ausführungsformen der Figuren 11 und 12 unterscheiden sich von den Ausführungsformen der Figuren 5 bzw. 6 durch die zusätzliche, dritte Bremse 36, deren Position und Funktion oben im Zusammenhang mit den Ausführungsformen der Figuren 9 und 10 beschrieben wurde, sowie durch die zusätzliche vierte Kupplung 38, mit der die Sonne 241 des dritten Planetensatzes 24 mit dem Rotor 182 der zweiten elektrischen Maschine gekoppelt ist. Anders ausgedrückt unterscheiden sich die Ausführungsformen der Figuren 11 und 12 von den Ausführungsformen der Figuren 9 und 10 dadurch, dass sie keine dritte Kupplung 34, dafür jedoch eine vierte Kupplung 38 umfassen. Gegenüber den Ausführungsformen der Figuren 5 und 6 lassen sich die folgenden neuen Modi realisieren.
- Fester (dritter) Gang:: erste Bremse 28 geöffnet, dritte Bremse 36 geöffnet, erste Kupplung 26 geschlossen, zweite Kupplung 32 geöffnet, vierte Kupplung 38 geschlossen.
- Fester (fünfter) Gang:: erste Bremse 28 geöffnet, dritte Bremse 36 geschlossen, erste Kupplung 26 geschlossen, zweite Kupplung 32 geöffnet, vierte Kupplung 38 geöffnet.

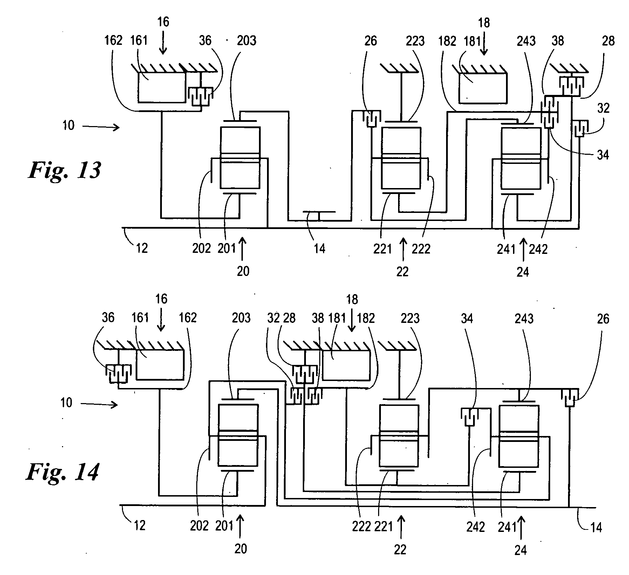

Die Ausführungsform den der Figuren 13 und 14 stellen Kombinationen der Ausführungsformen der Figuren 9 bzw. 10 mit den Ausführungsformen der Figuren 11 bzw. 12 dar. So werden die Ausführungsformen der Figuren 11 und 12 um die dritte Kupplung 34 ergänzt. Anders ausgedrückt werden die Ausführungsformen der Figuren 9 bzw. 10 um eine vierte Kupplung 38 ergänzt. Zur Positionierung und Wirkungsweise dieser Schaltelemente wird auf das oben gesagte verwiesen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. So können insbesondere die elektrischen Maschinen auch als hydraulische oder pneumatische Motoren/Generatoren ausgebildet sein.

### Bezugszeichenliste

- 10: Hybridantriebsanordnung
- 10': Hybridantriebsanordnung
- 12: Eingangswelle
- 14: Ausgangswelle
- 16: erste elektrische Maschine
- 161: Stator von 16
- 162: Rotor von 16
- 18: zweite elektrische Maschine
- 181: Stator von 18
- 182: Rotor von 18
- 20: erster Planetensatz
- 201: Sonne von 20
- 202: Steg von 20
- 203: Hohlrad von 20
- 22: zweiter Planetensatz
- 221: Sonne von 22
- 222: Steg von 22
- 223: Hohlrad von 22
- 24: dritter Planetensatz
- 241: Sonne von 24
- 242: Steg von 24
- 243: Hohlrad von 24
- 26: erste Kupplung
- 28: erste Bremse
- 30: zweite Bremse
- 32: zweite Kupplung
- 34: dritte Kupplung
- 36: dritte Bremse
- 38: vierte Kupplung

## Patentansprüche

1. Hybridantriebsanordnung für ein Kraftfahrzeug, umfassend
- eine erste und eine zweite elektrische Maschine (16; 18), die jeweils einen Rotor (162; 182) und einen Stator (161; 181) aufweisen und sowohl im motorischen als auch im generatorischen Betrieb betreibbar und über eine Leistungselektronik miteinander verbunden und an einen elektrischen Energiespeicher anschließbar sind,
- eine an eine Verbrennungskraftmaschine anschließbare Eingangswelle (12) und eine an einen Abtriebsstrang anschließbare Ausgangswelle (14),
- einen ersten Planetensatz (20), dessen Sonne (201) mit dem Rotor (162) der ersten elektrischen Maschine (16) verbunden ist, dessen Steg (202) mit der Eingangswelle (12) verbunden ist und dessen Hohlrad (203) mit der Ausgangswelle (14) verbünden ist,
- einen zweiten Planetensatz (22), dessen Sonne (221) mit dem Rotor (182) der zweiten elektrischen Maschine (18) verbunden ist, dessen Steg (222) über eine erste Kupplung (26) mit der Ausgangswelle (14) gekoppelt ist und dessen Hohlrad (223) mit einem Getriebegehäuse verbunden ist, und
- einen dritten Planetensatz (24), dessen Sonne (241) über eine erste Bremse (28) mit dem Getriebegehäuse gekoppelt ist, dessen Steg (242) mit der Eingangswelle (12) verbunden ist und dessen Hohlrad (243) mit dem Steg (222) des zweiten Planetensatzes (22) verbunden ist.

2. Hybridantriebsanordnung nach Anspruch 1, **dadurch gekennzeichnet, dass** der Rotor (182) der zweiten elektrischen Maschine (18) über eine zweite Bremse (30) mit dem Getriebegehäuse gekoppelt ist.

3. Hybridantriebsanordnung nach Anspruch 1, **dadurch gekennzeichnet, dass** die Sonne (241) des dritten Planetensatzes (24) über eine zweite Kupplung (32) mit der Eingangswelle (12) gekoppelt ist.

4. Hybridantriebsanordnung nach Anspruch 3, **dadurch gekennzeichnet, dass** die Sonne (221) des zweiten Planetensatzes (22) über eine dritte Kupplung (34) mit dem Steg (242) des dritten Planetensatzes (24) gekoppelt ist.

5. Hybridantriebsanordnung nach Anspruch 4, **dadurch gekennzeichnet, dass** der Rotor (162) der ersten elektrischen Maschine (16) über eine dritte Bremse (36) mit dem Getriebegehäuse gekoppelt ist.

6. Hybridantriebsanordnung nach Anspruch 3, **dadurch gekennzeichnet, dass** der Rotor (162) der ersten elektrischen Maschine (16) über eine dritte Bremse (36) mit dem Getriebegehäuse gekoppelt ist und dass der Rotor (182) der zweiten elektrischen Maschine (18) über eine vierte Kupplung (38) mit der Sonne (241) des dritten Planetensatzes (24) gekoppelt ist.

7. Hybridantriebsanordnung nach Anspruch 6, **dadurch gekennzeichnet, dass** die Sonne (221) des zweiten Planetensatzes (22) über eine dritte Kupplung (34) mit dem Steg (242) des dritten Planetensatzes (24) gekoppelt ist.

## Claims

1. Hybrid drive arrangement for a motor vehicle, comprising
- a first and a second electric machine (16; 18) which in each case have a rotor (162; 182) and a stator (161; 181), can be operated both in motor and in generator mode, are connected to one another via an electronic power system, and can be connected to an electric energy store,
- an input shaft (12) which can be connected to an internal combustion engine, and an output shaft (14) which can be connected to an output train,
- a first planetary set (20), the sun (201) of which is connected to the rotor (162) of the first electric machine (16), the spider (202) of which is connected to the input shaft (12), and the internal gear (203) of which is connected to the output shaft (14),
- a second planetary set (22), the sun (221) of which is connected to the rotor (182) of the second electric machine (18), the spider (222) of which is coupled via a first clutch (26) to the output shaft (14), and the internal gear (223) of which is connected to a transmission housing, and
- a third planetary set (24), the sun (241) of which is coupled via a first brake (28) to the transmission housing, the spider (242) of which is connected to the input shaft (12), and the internal gear (243) of which is connected to the spider (222) of the second planetary set (22).

2. Hybrid drive arrangement according to Claim 1, **characterized in that** the rotor (182) of the second electric machine (18) is coupled via a second brake (30) to the transmission housing.

3. Hybrid drive arrangement according to Claim 1, **characterized in that** the sun (241) of the third planetary set (24) is coupled via a second clutch (32) to the input shaft (12).

4. Hybrid drive arrangement according to Claim 3, **characterized in that** the sun (221) of the second planetary set (22) is coupled via a third clutch (34) to the spider (242) of the third planetary set (24).

5. Hybrid drive arrangement according to Claim 4, **characterized in that** the rotor (162) of the first electric machine (16) is coupled via a third brake (36) to the transmission housing.

6. Hybrid drive arrangement according to Claim 3, **characterized in that** the rotor (162) of the first electric machine (16) is coupled via a third brake (36) to the transmission housing, and **in that** the rotor (182) of the second electric machine (18) is coupled via a fourth clutch (38) to the sun (241) of the third planetary set (24).

7. Hybrid drive arrangement according to Claim 6, **characterized in that** the sun (221) of the second planetary set (22) is coupled via a third clutch (34) to the spider (242) of the third planetary set (24).

## Revendications

1. Système de propulsion hybride pour un véhicule automobile, comprenant :
- une première et une deuxième machine électrique (16 ; 18), qui présentent chacune un rotor (162 ; 182) et un stator (161 ; 181) et qui peuvent fonctionner à la fois en mode moteur et en mode de générateur et qui sont connectées l'une à l'autre par le biais d'une électronique de puissance et qui peuvent être raccordées à un accumulateur d'énergie électrique,
- un arbre d'entrée (12) pouvant être raccordé à un moteur à combustion interne et un arbre de sortie (14) pouvant être raccordé à une section de prise de force,
- un premier train planétaire (20), dont la roue solaire (201) est connectée au rotor (162) de la première machine électrique (16), dont le porte-satellites (202) est connecté à l'arbre d'entrée (12) et dont la couronne dentée (203) est connectée à l'arbre de sortie (14),
- un deuxième train planétaire (22), dont la roue solaire (221) est connectée au rotor (182) de la deuxième machine électrique (18), dont le porte-satellites (222) est connecté par le biais d'un premier accouplement (26) à l'arbre de sortie (14) et dont la couronne dentée (223) est connectée à un carter de transmission, et
- un troisième train planétaire (24), dont la roue solaire (241) est connectée par le biais d'un premier frein (28) au carter de transmission, dont le porte-satellites (242) est connecté à l'arbre d'entrée (12) et dont la couronne dentée (243) est connectée au porte-satellites (222) du deuxième train planétaire (22).

2. Système de propulsion hybride selon la revendication 1, **caractérisé en ce que** le rotor (182) de la deuxième machine électrique (18) est accouplé par le biais d'un deuxième frein (30) au carter de transmission.

3. Système de propulsion hybride selon la revendication 1, **caractérisé en ce que** la roue solaire (241) du troisième train planétaire (24) est accouplée par le biais d'un deuxième accouplement (32) à l'arbre d'entrée (12).

4. Système de propulsion hybride selon la revendication 3, **caractérisé en ce que** la roue solaire (221) du deuxième train planétaire (22) est accouplée par le biais d'un troisième accouplement (34) au porte-satellites (242) du troisième train planétaire (24).

5. Système de propulsion hybride selon la revendication 4, **caractérisé en ce que** le rotor (162) de la première machine électrique (16) est accouplé par le biais d'un troisième frein (36) au carter de transmission.

6. Système de propulsion hybride selon la revendication 3, **caractérisé en ce que** le rotor (162) de la première machine électrique (16) est accouplé par le biais d'un troisième frein (36) au carter de transmission et **en ce que** le rotor (182) de la deuxième machine électrique (18) est accouplé par le biais d'un quatrième accouplement (38) à la roue solaire (241) du troisième train planétaire (24).

7. Système de propulsion hybride selon la revendication 6, **caractérisé en ce que** la roue solaire (221) du deuxième train planétaire (22) est accouplé par le biais d'un troisième accouplement (34) au porte-satellites (242) du troisième train planétaire (24).
